# EUROPEAN PATENT SPECIFICATION

(11) **EP 2 215 860 B1**
(45) Date of publication and mention of the grant of the patent: **15.11.2017**
(21) Application number: 07852180.4
(22) Date of filing: 28.11.2007
(51) Int. Cl.: H04W 24/00, H04W 36/00, H04W 72/04, H04W 48/10, H04W 76/02, H04W 48/20, H04W 88/06, H04W 36/30, H04W 48/12

(54) **CONNECTION FAILURE NOTIFICATION METHOD AND APPARATUS**
VERBINDUNGSFEHLSCHLAG-BENACHRICHTIGUNGSVERFAHREN UND VORRICHTUNG
PROCÉDÉ ET APPAREIL DE NOTIFICATION DE DÉFAUT DE CONNEXION

(43) Date of publication of application: 11.08.2010
(73) Proprietor: Telefonaktiebolaget LM Ericsson (publ), 164 83 Stockholm (SE)
(72) Inventor: ISAKSSON, Niklas, S-435 41 Mölnlycke (SE); STÅHLE, Per, S-18656 Vallentuna (SE); STANDAR MAGNUS, Magnus, S-448 31 Floda (SE); OLSSON, Andreas, S-112 16 Stockholm (SE)
(74) Representative: Brann AB
(86) International application number: PCT/SE2007/050908
(87) International publication number: WO 2009/070072

(56) References cited:
- WO-A1-2005/112500
- US-A- 6 038 212
- US-A1- 2005 053 043
- US-A1- 2007 070 938
- 'Technical Specification, 3rd Generation Partnership Project; Technical Specification Group Radio Access Network; Requirements for support of radio resource management (FDD)(Release 7)' 3GPP TS 25.133 V7.9.0, [Online] September 2007, pages 32 - 33, XP055100209 Retrieved from the Internet: <URL:http://www.3gpp.org/ftp/Specs/archive/ 25_series/ 25.133/25133-790.zip> [retrieved on 2008-09-08]
- GANDHI, R: 'Tolerance to access-point failures in dependable wireless local-area networks Object-Oriented Real-Time Dependable Systems' PROCEEDINGS OF THE NINTH IEEE INTERNATIONAL WORKSHOP ON 1-3 OCT. 2003, [Online] 2003, PISCATAWAY, NJ, USA, XP031099411 Retrieved from the Internet: <URL:http://ieeexplore.ieee.org/ie15/8947/2 8342/01267501.pdf?tp=&arnumber=1267501&isnu mber=283421>

## Description

### TECHNICAL FIELD

The present invention relates generally to transmission interface failures between network nodes in a wireless communication system.

### BACKGROUND

Wireless communication systems typically include multiple wireless networks that rely on different radio access technologies to exchange information between a core network and a mobile device, such as a cellular telephone. In general, the mobile device communicates with an access point in one of the wireless networks according to the radio access technology associated with the wireless network, e.g., GSM, UMTS, LTE, etc. The access point in turn communicates with the core network according to the appropriate radio access technology. Such communications operate without interruption as long as the communication link(s) between the mobile device and the core network are maintained. A failure in one or more of the communication links jeopardizes the ongoing communications between the mobile device and the core network.

For example, when operating in a UMTS network, the mobile device communicates with a NodeB access point. The NodeB in turn communicates with the core network via a Radio Network Controller (RNC). A failure in the communication link between the NodeB and the RNC, or between the RNC and the core network prevents the NodeB from operating properly. Similarly, when operating in an LTE network, a failure in the communication link between the eNodeB access point and the core network prevents the eNodeB access point from working properly.

When prior art networks encounter this problem, the affected mobile devices enter an idle mode. During idle mode operation, the mobile devices may attempt to access a different access point to reestablish communications with the core network. In some cases, one or more of the mobile devices may attempt to access an access point associated with a different radio access technology. Alternatively or additionally, some or all of the mobile devices may attempt to simultaneously access the same access point in a neighboring cell. These types of transitions may put an undesirably large strain on the affected neighboring cells. Further, functionality to have optimized neighbor cell relations in a network may be based on UE measurements on neighbor cells. A failure in the communication link between the access point and the core network may impact this functionality.

US 2005/053043 A1 describes a method and system for providing assistance data to wireless transmit/receive units (WTRUs), which facilitates handover of the WTRUs by providing essential information regarding finding/identifying neighboring access points, wherein the assistance data includes information regarding an access point's neighboring access points.

US 2007/070938 A1 describes a method where a base station detects a connection failure towards a backhaul network and thereupon notifies a wireless terminal, following which updates its base station list to exclude the base station and move it to the connection failure list. The invention is disclosed in the appended claims.

### DETAILED DESCRIPTION

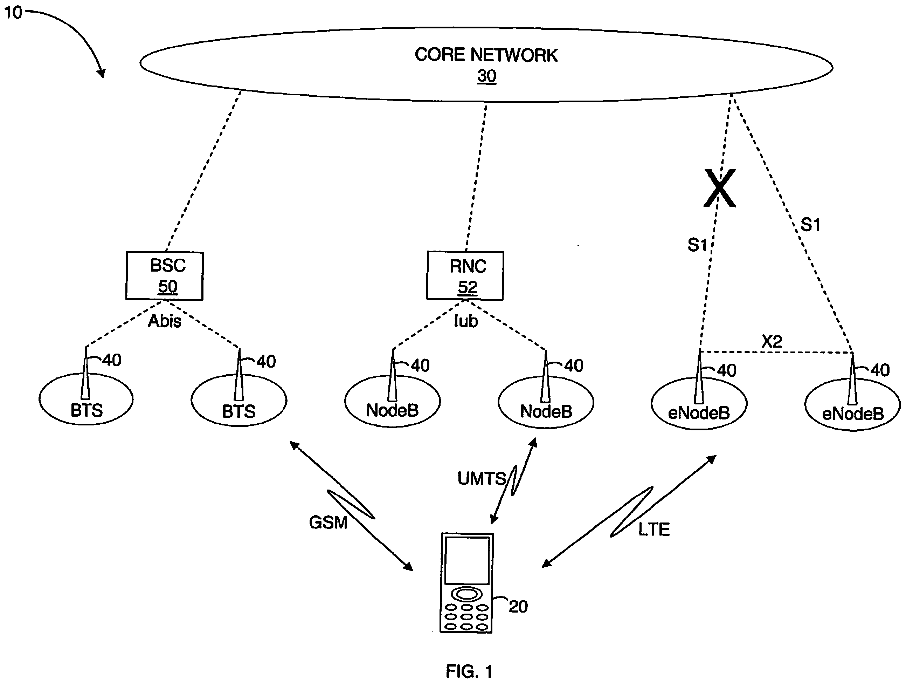

Figure 1 shows one exemplary wireless communication system 10. The wireless communication system 10 includes one or more access points 40 that enable wireless communications with mobile devices 20, such as mobile telephones, personal digital assistants, laptop computers, etc. The access points 40 may implement the same access technology, or may implement different access technologies. For a GSM network, the access point 40 comprises a Base Transceiver Station (BTS), while for UMTS and LTE networks, the access point 40 comprises a NodeB and an eNodeB, respectively. While not shown, other access points 40, e.g., a WLAN access point, may be included in wireless communication system 10. The access points 40 connect the mobile device 20 to a core network 30. For a GSM network, the BTS 40 connects to a Base Station Controller (BSC) 50 over an Abis interface, and the BSC 50 in turn connects to the core network 30. For a UMTS network, the NodeB 40 connects to a Radio Network Controller (RNC) 52 over an lub interface, and the RNC 52 in turn connects to the core network 30. For an LTE network, the eNodeB connects to a serving gateway and mobility management entity in the core network 30 via an S1 interface.

When the connection between an access point 40 and the core network 30 is interrupted or fails, e.g., as shown with the LTE network in Figure 1, the affected access point 40 is typically removed from service and mobile devices 20 served by the removed access point 40 switch to an idle mode. During idle mode, the mobile devices 20 select and attempt to access a new access point 40 as soon as possible to reestablish communications with the core network 30. The mobile devices 20 may select an access point 40 using a different radio access technology than the originally serving access point 40. Further, the abrupt transition of multiple mobile devices 20 to a new access point 40 may undesirably overload neighboring access points 40.

According to embodiments of the present invention, an access point 40 monitors the state of its connection to the core network 30 and broadcasts a notification to the mobile devices 20 when the connection is interrupted or fails. The access point 40 may also broadcast redirect information to the mobile devices 20 to indicate the preferred access points 40 available for reselection by the mobile devices 20. The redirect information may also indicate specific times when the mobile devices 20 should switch to the neighboring access points 40. Thus, the mobile devices 20 may be "scheduled" so that large numbers of mobile devices 20 do not all switch to the same neighboring access point 40 at the same time.

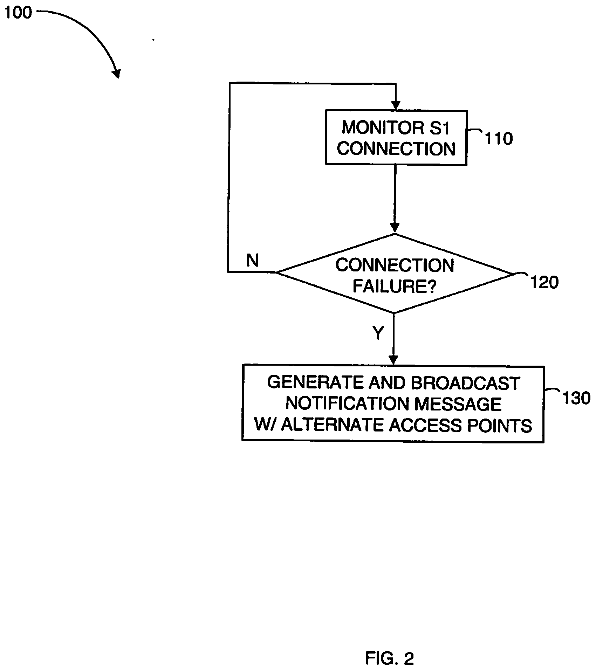

Figure 2 illustrates an exemplary method 100 implemented by an access point 40. The serving access point 40 monitors the connection between the access point 40 and the core network 30 (block 110). Upon detection of a connection failure (block 120), the access point 40 generates and broadcasts a notification to the mobile devices 20 (block 130) indicating that the access point is out-of-service. The broadcasted notification includes redirect information that identifies one or more alternate access points 40 available for reselection by the mobile devices 20. For example, the redirect information may identify an access point 40 of a neighboring cell. The redirect information may also include scheduled times for the mobile devices 20 to switch to the neighboring access points 40.

Access points 40 may generate the redirect information of the notification message based on any available neighboring cell information. For example, a serving access point 40 may identify multiple alternate access points 40 based on the number of mobile devices 20 currently under the control of the serving access point 40, the current load of neighboring access points 40, etc. It will be appreciated that some or all of the load information required to generate the redirect information may be provided by the neighboring access points 40 via an interface between the access points, e.g., an X2 interface, and/or by the mobile devices 20. Regardless, the broadcasted notification message identifies specific alternate access points 40 available to the mobile devices 20 affected by the connection failure.

Responsive to the notification message, the mobile devices 20 attempt to access one of the alternate access points 40 identified by the broadcasted notification message to continue communications with the core network 30. It will be appreciated that the redirect information may identify specific alternate access points 40 for specific mobile devices 20. For example, the redirect information may specify that one mobile device 20 should access a first alternate access point 40, and that another mobile device 20 should access a second alternate access point 40. Alternatively, each mobile device 20 may select one of the access points 40 identified by the redirect information according to some predetermined criteria. For example, a mobile device 20 may select one of the identified access points 40 by selecting the closest identified access point 40. In any event, the redirect information controls which alternate access points 40 are accessed by the mobile devices 20 in the event of a connection failure at the serving access point 40.

While not required, the broadcasted notification message may include timing information that controls when some or all of the mobile devices 20 may attempt to access an alternate access point 40 identified by the redirect information. For example, the timing information may identify a designated access time for some or all of the mobile devices 20, where each mobile device 20 attempts to access an alternate access point 40 at its designated access time. Alternatively, the timing information may instruct some or all of the mobile devices 20 to wait for a second notification message before attempting to access an alternate access point 40. In this case, the serving access point 40 may delay transmission of the second notification message to delay the transitions of the mobile devices 20 to the alternate access points 40. Thus, the second notification message may be used to control when each mobile device 20 transitions to an alternate access point 40.

In still another example, where the timing information instructs some or all of the mobile devices 20 to wait for a second notification message, the access point 40 may delay sending the second notification message a predetermined time period while it attempts to reestablish the connection with the core network 30. If the access point 40 is successful, the second notification message may inform some or all of the mobile devices 20 that the connection has been reestablished, which effectively cancels the first notification message. If the access point 40 is not successful within the predetermined time period, the access point 40 may delay transmission of the second notification message to delay the transitions of the mobile devices 20 to the alternate access points 40, and therefore, to control when each mobile device 20 transitions to an alternate access point 40.

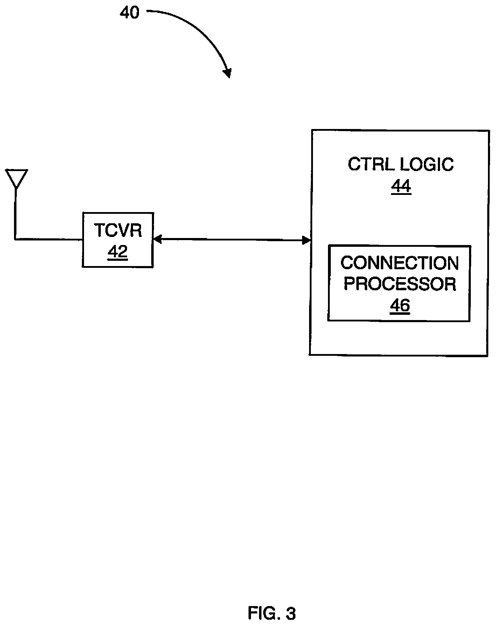

Figure 3 shows an exemplary block diagram of an access point 40 according to the present invention. The access point includes a transceiver 42 and control logic 44. The transceiver connects to an antenna that wirelessly communicates with the mobile devices 20 according to instructions provided by the control logic 44. The control logic further includes a connection processor 46 that implements the above-described process for notifying a mobile device 20 of a connection failure between the access point 40 and the core network 30.

The above-described invention addresses the issues associated with prior art solutions for connection failures between an access point 40 and a core network 30 in a wireless communication system 10. By directing the mobile devices 20 affected by the connection failure to specific alternate access points 40, the present invention controls the impact of the connection failure on neighboring cells. Further, the present invention may prevent multiple mobile devices 20 from simultaneously attempting to access one access point 40 by providing means for controlling the timing associated with the transition of the mobile devices 20 to alternate access points 40. Further still, the present invention enables one access point 40 to continue to dynamically keep track of other access points 40. For example, in conventional systems, an access point 40 associated with a connection failure may be deleted from the neighbor lists of neighboring access points 40 due to a lack of proposed neighbors from mobile device measurements for an access point 40 associated with a connection failure. The present invention allows the affected access point 40 to stay on the neighbor lists of the neighboring access points 40 with the understanding that the affected access point 40 is unavailable until the connection is restored. In this case, one or more of the affected mobile devices 20 may report the connection failure to one or more neighboring access points.

The present invention may, of course, be carried out in other specific ways than those herein set forth without departing from the scope and essential characteristics of the invention. The present embodiments are, therefore, to be considered in all respects as illustrative and not restrictive, and all changes coming within the meaning and equivalency range of the appended claims are intended to be embraced therein.

## Claims

1. A method (100) of notifying mobile devices (20) of a connection failure between an access point (40) and a network node (50, 52) in a wireless communication system (10), the method (100) comprising:
detecting (120) a connection failure for an interface between the access point (40) and the network node (50, 52);
generating and broadcasting (130), by the access point (40), a notification message responsive to the connection failure to notify mobile devices (20), serviced by the access point (40), of the connection failure, wherein the notification message includes redirect information that identifies one or more alternate access points (40) for the mobile devices (20); and
redirecting the mobile devices (20) to one or more of the alternate access points (40) based on the redirect information in the notification message,
wherein the notification message further includes timing information identifying when the mobile devices (20) should redirect to one or more of the alternate access points (40).

2. The method (100) of claim 1 wherein the timing information comprises redirection times for one or more of the mobile devices (20), the timing information instructing the mobile devices (20) to wait for a second notification message before redirecting to the one or more alternate access points (40).

3. The method (100) of claim 2 further comprising transmitting the second notification message to the mobile devices (20) at different times.

4. The method (100) of claims 1 or 2 further comprising:
reconfiguring the interface to re-establish the connection between the access point (40) and the network node (50, 52); and
broadcasting a second notification message to the mobile devices (20) to notify the mobile devices (20) of the re-established connection to overturn the redirection to one or more of the alternate access points (40).

5. An access point (40) connectable to a wireless communication system (10), the access point (40) comprising a connection processor (46) configured to:
detect (120) a connection failure for an interface between the access point (40) and a network node (50, 52) in the wireless communication system (10); and
generate and broadcast (130) a notification message responsive to the connection failure to notify mobile devices (20) serviced by the access point (40) of the connection failure, wherein the notification message includes redirect information that identifies one or more alternate access points (40) for the mobile devices (20),
wherein the mobile devices (20) select one or more of the alternate access points (40), based on the redirect information in the notification message, and
wherein the notification message includes timing information identifying when the mobile devices (20) should redirect to one or more of the alternate access points (40).

6. The access point (40) of claim 5 wherein the timing information comprises redirection times for one or more of the mobile devices (20) which instructs the mobile devices (20) to wait for a second notification message before redirecting to one or more of the alternate access points (40).

7. The access point (40) of claim 6 wherein the connection processor (46) is further configured to transmit the second notification message to the mobile devices (20) at different times.

8. The access point (40) of claims 5 or 6 wherein the connection processor (46) is further configured to:
reconfigure the interface to reestablish the connection between the access point (40) and the network node (50, 52); and
broadcast a second notification message to the mobile devices (20) to notify the mobile devices (20) of the reestablished connection to overturn the redirection to one or more of the alternate access points (40).

9. A method of notifying a mobile device (20) of a connection failure between an access point (40) and a network node (50, 52) in a wireless communication system (10), the method, being performed at the mobile device (20), comprising:
receiving a broadcasted notification message indicating a connection failure between the access point (40) and the network node (50, 52), wherein the notification message includes redirect information identifying one or more alternate access points (40) for the mobile device (20); and
using the redirect information to access one of the one or more alternate access points (40),
wherein the notification message includes timing information identifying when the mobile device (20) should redirect to the one of the one or more alternate access points (40).

10. The method of claim 9 wherein using the redirect information to access the one of the one or more alternate access points (40) comprises using the redirect information to access the one of the one or more alternate access points (40) at an explicit redirection time identified by the timing information, the timing information instructing the mobile device (20) to delay accessing the one of the one or more alternate access points (40) until a second notification message is received.

11. The method of claim 10 wherein the second notification message informs the mobile device (20) of a re-established connection between the access point (40) and the network node (50, 52).

12. The method of claim 9 further comprising reporting the connection failure, by the access point (40), to the one or more alternate access points (40).

13. A mobile device (20) operatively associated with an access point (40) in a wireless communication system (10), the mobile device (20) comprising a processor configured to:
receive a broadcasted notification message indicating a connection failure between the access point (40) and a network node (50, 52) in the wireless communication system (10), wherein the notification message includes redirect information identifying one or more alternate access points (40) for the mobile device (20); and use the redirect information to access one of the one or more alternate access points (40),
wherein the notification message includes timing information identifying when the mobile device (20) should redirect to the one of the one or more alternate access points (40).

14. The mobile device (20) of claim 13 wherein the processor uses the redirect information to access the one of the one or more alternate access points (40) at an explicit redirection time identified by the timing information, the timing information instructing the mobile device (20) to delay accessing the one of the one or more alternate access points (40) until a second notification message is received.

15. The mobile device (20) of claim 14 wherein the second notification message informs the mobile device (20) of a re-established connection between the access point (40) and the network node (50, 52).

## Patentansprüche

1. Verfahren (100) zum Benachrichtigen von Mobilgeräten (20) über einen Verbindungsfehlschlag zwischen einem Zugangspunkt (40) und einem Netzwerkknoten (50, 52) in einem drahtlosen Kommunikationssystem (10), das Verfahren (100) umfassend:
Erkennen (120) eines Verbindungsfehlschlags für eine Schnittstelle zwischen dem Zugangspunkt (40) und dem Netzwerkknoten (50, 52);
Erzeugen und Senden (130), durch den Zugangspunkt (40), einer Benachrichtigungsnachricht als Antwort auf den Verbindungsfehlschlag, um Mobilgeräte (20), die von dem Zugangspunkt (40) bedient werden, über den Verbindungsfehlschlag zu benachrichtigen, wobei die Benachrichtigungsnachricht Umleitungsinformationen beinhaltet, die einen oder mehrere alternative Zugangspunkte (40) für die Mobilgeräte (20) identifizieren; und
Umleiten der Mobilgeräte (20) zu einem oder mehreren der alternativen Zugangspunkte (40) basierend auf den Umleitungsinformationen in der Benachrichtigungsnachricht,
wobei die Benachrichtigungsnachricht ferner Zeitinformationen beinhaltet, die identifizieren, wann die Mobilgeräte (20) zu einem oder mehreren der alternativen Zugangspunkte (40) umleiten sollten.

2. Verfahren (100) nach Anspruch 1, wobei die Zeitinformationen Umleitungszeiten für eines oder mehrere der Mobilgeräte (20) umfassen, wobei die Zeitinformationen die Mobilgeräte (20) anweisen, auf eine zweite Benachrichtigungsnachricht zu warten, bevor sie zu dem einen oder den mehreren alternativen Zugangspunkten (40) umleiten.

3. Verfahren (100) nach Anspruch 2, weiter umfassend das Übertragen der zweiten Benachrichtigungsnachricht an die Mobilgeräte (20) zu verschiedenen Zeiten.

4. Vorrichtung (100) nach Anspruch 1 oder 2, ferner umfassend:
Rekonfigurieren der Schnittstelle, um die Verbindung zwischen dem Zugangspunkt (40) und dem Netzwerkknoten (50, 52) wiederherzustellen; und
Senden einer zweiten Benachrichtigungsnachricht an die Mobilgeräte (20), um die Mobilgeräte (20) über die wiederhergestellte Verbindung zu benachrichtigen, um die Umleitung zu einem oder mehreren der alternativen Zugangspunkte (40) aufzuheben.

5. Zugangspunkt (40), der mit einem drahtlosen Kommunikationssystem (10) verbindbar ist, wobei der Zugangspunkt (40) einen Verbindungsprozessor (46) umfasst, der konfiguriert ist, um:
einen Verbindungsfehlschlag für eine Schnittstelle zwischen dem Zugangspunkt (40) und einem Netzwerkknoten (50, 52) in dem drahtlosen Kommunikationssystem (10) zu erkennen (120); und
eine Benachrichtigungsnachricht als Antwort auf den Verbindungsfehlschlag zu erzeugen und zu senden (130), um Mobilgeräte (20), die von dem Zugangspunkt (40) bedient werden, über den Verbindungsfehlschlag zu benachrichtigen, wobei die Benachrichtigungsnachricht Umleitungsinformationen beinhaltet, die einen oder mehrere alternative Zugangspunkte (40) für die Mobilgeräte (20) identifizieren,
wobei die Mobilgeräte (20) eine oder mehreren der alternativen Zugangspunkte (40) basierend auf den Umleitungsinformationen in der Benachrichtigungsnachricht auswählen, und
wobei die Benachrichtigungsnachricht Zeitinformationen beinhaltet, die identifizieren, wann die Mobilgeräte (20) zu einem oder mehreren der alternativen Zugangspunkte (40) umleiten sollten.

6. Zugangspunkt (40) nach Anspruch 5, wobei die Zeitinformationen Umleitungszeiten für eines oder mehrere der Mobilgeräte (20) umfassen, die die Mobilgeräte (20) anweisen, auf eine zweite Benachrichtigungsnachricht zu warten, bevor sie zu einem oder mehreren der alternativen Zugangspunkte (40) umleiten.

7. Zugangspunkt (40) nach Anspruch 6, wobei der Verbindungsprozessor (46) ferner konfiguriert ist, die zweite Benachrichtigungsnachricht zu verschiedenen Zeiten an die Mobilgeräte (20) zu übertragen.

8. Zugangspunkt (40) nach Anspruch 5 oder 6, wobei der Verbindungsprozessor (46) ferner konfiguriert ist, um:
die Schnittstelle zu rekonfigurieren, um die Verbindung zwischen dem Zugangspunkt (40) und dem Netzwerkknoten (50, 52) wiederherzustellen; und
eine zweite Benachrichtigungsnachricht an die Mobilgeräte (20) zu senden, um die Mobilgeräte (20) über die wiederhergestellte Verbindung zu benachrichtigen, um die Umleitung zu einem oder mehreren der alternativen Zugangspunkte (40) aufzuheben.

9. Verfahren zum Benachrichtigen eines Mobilgeräts (20) über einen Verbindungsfehlschlag zwischen einem Zugangspunkt (40) und einem Netzwerkknoten (50, 52) in einem drahtlosen Kommunikationssystem (10), wobei das Verfahren, das an dem Mobilgerät (20) durchgeführt wird, umfasst:
Empfangen einer gesendeten Benachrichtigungsnachricht, die einen Verbindungsfehlschlag zwischen dem Zugangspunkt (40) und dem Netzwerkknoten (50, 52) angibt, wobei die Benachrichtigungsnachricht Umleitungsinformationen beinhaltet, die einen oder mehrere alternative Zugangspunkte (40) für das Mobilgerät (20) identifizieren; und
Verwenden der Umleitungsinformationen, um auf einen des einen oder der mehreren alternativen Zugangspunkte (40) zuzugreifen,
wobei die Benachrichtigungsnachricht Zeitinformationen beinhaltet, die identifizieren, wann das Mobilgerät (20) zu dem einen von dem einen oder den mehreren der alternativen Zugangspunkte (40) umleiten sollte.

10. Verfahren nach Anspruch 9, wobei das Verwenden der Umleitungsinformationen, um auf den einen des einen oder der mehreren alternativen Zugangspunkte (40) zuzugreifen, das Verwenden von Umleitungsinformationen umfasst, um zu einer konkreten Umleitungszeit, die von den Zeitinformationen identifiziert wird, auf den einen des einen oder der mehreren alternativen Zugangspunkte (40) zuzugreifen, wobei die Zeitinformationen das Mobilgerät (20) anweisen, den Zugriff auf den einen des einen oder der mehreren alternativen Zugangspunkte (40) zu verzögern, bis eine zweite Benachrichtigungsnachricht empfangen wird.

11. Verfahren nach Anspruch 10, wobei die zweite Benachrichtigungsnachricht das Mobilgerät (20) über eine wiederhergestellte Verbindung zwischen dem Zugangspunkt (40) und dem Netzwerkknoten (50, 52) informiert.

12. Verfahren nach Anspruch 9, ferner umfassend das Melden eines Verbindungsfehlschlags durch den Zugangspunkt (40) an den einen oder die mehreren alternativen Zugangspunkte (40).

13. Mobilgerät (20), das in einem drahtlosen Kommunikationssystem (10) betriebsmäßig mit einem Zugangspunkt (40) assoziiert ist, wobei das Mobilgerät (20) einen Prozessor umfasst, der konfiguriert ist, um:
eine gesendete Benachrichtigungsnachricht, die einen Verbindungsfehlschlag zwischen dem Zugangspunkt (40) und einem Netzwerkknoten (50, 52) in dem Kommunikationssystem (10) angibt, zu empfangen, wobei die Benachrichtigungsnachricht Umleitungsinformationen beinhaltet, die einen oder mehrere alternative Zugangspunkte (40) für das Mobilgerät (20) identifizieren; und
die Umleitungsinformationen zu verwenden, um auf einen des einen oder der mehreren alternativen Zugangspunkte (40) zuzugreifen,
wobei die Benachrichtigungsnachricht Zeitinformationen beinhaltet, die identifizieren, wann das Mobilgerät (20) zu dem einen von dem einen oder der mehreren der alternativen Zugangspunkte (40) umleiten sollte.

14. Mobilgerät (20) nach Anspruch 13, wobei der Prozessor die Umleitungsinformationen verwendet, um zu einer konkreten Umleitungszeit, die von den Zeitinformationen identifiziert wird, auf den einen des einen oder der mehreren alternativen Zugangspunkte (40) zuzugreifen, wobei die Zeitinformationen das Mobilgerät (20) anweisen, den Zugriff auf den einen des einen oder der mehreren alternativen Zugangspunkte (40) zu verzögern, bis eine zweite Benachrichtigungsnachricht empfangen wird.

15. Mobilgerät (20) nach Anspruch 14, wobei die zweite Benachrichtigungsnachricht das Mobilgerät (20) über eine wiederhergestellte Verbindung zwischen dem Zugangspunkt (40) und dem Netzwerkknoten (50, 52) informiert.

## Revendications

1. Procédé (100) de notification de dispositifs mobiles (20) d'un défaut de connexion entre un point d'accès (40) et un noeud de réseau (50, 52) dans un système de communication sans fil (10), le procédé (100) comprenant :
la détection (120) d'un défaut de connexion pour une interface entre le point d'accès (40) et le noeud de réseau (50, 52) ;
la génération et la diffusion (130), par le point d'accès (40), d'un message de notification en réponse au défaut de connexion pour notifier les dispositifs mobiles (20), desservis par le point d'accès (40), du défaut de connexion, dans lequel le message de notification comprend des informations de redirection qui identifient un ou plusieurs points d'accès alternatifs (40) pour les dispositifs mobiles (20) ; et
la redirection des dispositifs mobiles (20) vers un ou plusieurs des points d'accès alternatifs (40) en fonction des informations de redirection dans le message de notification,
dans lequel le message de notification comprend en outre des informations de synchronisation identifiant le moment où les dispositifs mobiles (20) doivent être redirigés vers un ou plusieurs des points d'accès alternatifs (40).

2. Procédé (100) selon la revendication 1, dans lequel les informations de synchronisation comprennent des temps de redirection pour un ou plusieurs des dispositifs mobiles (20), les informations de synchronisation indiquant aux dispositifs mobiles (20) d'attendre un second message de notification avant la redirection vers les un ou plusieurs points d'accès alternatifs (40).

3. Procédé (100) selon la revendication 2 comprenant en outre la transmission du second message de notification aux dispositifs mobiles (20) à différents moments.

4. Procédé (100) selon les revendications 1 ou 2 comprenant en outre :
la reconfiguration de l'interface pour rétablir la connexion entre le point d'accès (40) et le noeud de réseau (50, 52) ; et
la diffusion d'un second message de notification aux dispositifs mobiles (20) pour notifier les dispositifs mobiles (20) de la connexion rétablie pour renverser la redirection sur un ou plusieurs des points d'accès alternatifs (40).

5. Point d'accès (40) pouvant être connecté à un système de communication sans fil (10), le point d'accès (40) comprenant un processeur de connexion (46) conçu pour :
détecter (120) un défaut de connexion pour une interface entre le point d'accès (40) et un noeud de réseau (50, 52) dans le système de communication sans fil (10) ; et
générer et diffuser (130) un message de notification en réponse au défaut de connexion pour notifier les dispositifs mobiles (20) desservis par le point d'accès (40) du défaut de connexion, dans lequel le message de notification comprend des informations de redirection qui identifient un ou plusieurs points d'accès alternatifs (40) pour les dispositifs mobiles (20),
dans lequel les dispositifs mobiles (20) sélectionnent un ou plusieurs des points d'accès alternatifs (40), en fonction des informations de redirection dans le message de notification, et dans lequel le message de notification comprend des informations de synchronisation identifiant le moment où les dispositifs mobiles (20) doivent être redirigés vers un ou plusieurs des points d'accès alternatifs (40).

6. Point d'accès (40) selon la revendication 5 dans lequel les informations de synchronisation comprennent des temps de redirection pour un ou plusieurs des dispositifs mobiles (20) qui demandent aux dispositifs mobiles (20) d'attendre un second message de notification avant la redirection vers un ou plusieurs des points d'accès alternatifs (40).

7. Point d'accès (40) selon la revendication 6 dans lequel le processeur de connexion (46) est en outre conçu pour transmettre le second message de notification aux dispositifs mobiles (20) à différents moments.

8. Point d'accès (40) selon les revendications 5 ou 6 dans lequel le processeur de connexion (46) est en outre conçu pour :
reconfigurer l'interface pour rétablir la connexion entre le point d'accès (40) et le noeud de réseau (50, 52) ; et
diffuser un second message de notification aux dispositifs mobiles (20) pour notifier les dispositifs mobiles (20) de la connexion rétablie pour renverser la redirection sur un ou plusieurs des points d'accès alternatifs (40).

9. Procédé de notification d'un dispositif mobile (20) d'un défaut de connexion entre un point d'accès (40) et un noeud de réseau (50, 52) dans un système de communication sans fil (10), le procédé étant mis en oeuvre au niveau du dispositif mobile (20), comprenant :
la réception d'un message de notification diffusé indiquant un défaut de connexion entre le point d'accès (40) et le noeud de réseau (50, 52), dans lequel le message de notification comprend des informations de redirection identifiant un ou plusieurs points d'accès alternatifs (40) pour le dispositif mobile (20) ; et
l'utilisation des informations de redirection pour accéder à l'un des un ou plusieurs points d'accès alternatifs (40),
dans lequel le message de notification comprend des informations de synchronisation identifiant le moment où le dispositif mobile (20) doit être redirigé vers l'un des un ou plusieurs points d'accès alternatifs (40).

10. Procédé selon la revendication 9 dans lequel l'utilisation des informations de redirection pour accéder à l'un des un ou plusieurs points d'accès alternatifs (40) comprend l'utilisation des informations de redirection pour accéder à l'un des un ou plusieurs points d'accès alternatifs (40) à un temps de redirection explicite identifié par les informations de synchronisation, les informations de synchronisation indiquant au dispositif mobile (20) de retarder l'accès à l'un des un ou plusieurs points d'accès alternatifs (40) jusqu'à ce qu'un second message de notification soit reçu.

11. Procédé selon la revendication 10 dans lequel le second message de notification informe le dispositif mobile (20) d'une connexion rétablie entre le point d'accès (40) et le noeud de réseau (50, 52) .

12. Procédé selon la revendication 9 comprenant en outre la signalisation du défaut de connexion, par le point d'accès (40), aux un ou plusieurs points d'accès alternatifs (40).

13. Dispositif mobile (20) associé de manière opérationnelle à un point d'accès (40) dans un système de communication sans fil (10), le dispositif mobile (20) comprenant un processeur conçu pour :
recevoir un message de notification diffusé indiquant un défaut de connexion entre le point d'accès (40) et un noeud de réseau (50, 52) dans le système de communication sans fil (10), dans lequel le message de notification comprend des informations de redirection identifiant un ou plusieurs points d'accès alternatifs (40) pour le dispositif mobile (20) ; et
utiliser les informations de redirection pour accéder à l'un des un ou plusieurs points d'accès alternatifs (40),
dans lequel le message de notification comprend des informations de synchronisation identifiant le moment où le dispositif mobile (20) doit être redirigé vers l'un des un ou plusieurs points d'accès alternatifs (40).

14. Dispositif mobile (20) selon la revendication 13 dans lequel le processeur utilise les informations de redirection pour accéder à l'un des un ou plusieurs points d'accès alternatifs (40) à un temps de redirection explicite identifié par les informations de synchronisation, les informations de synchronisation indiquant au dispositif mobile (20) de retarder l'accès à l'un des un ou plusieurs points d'accès alternatifs (40) jusqu'à ce qu'un second message de notification soit reçu.

15. Dispositif mobile (20) selon la revendication 14 dans lequel le second message de notification informe le dispositif mobile (20) d'une connexion rétablie entre le point d'accès (40) et le noeud de réseau (50, 52).
